(19)

Europäisches
Patentamt
European
Patent Office
Office européen
des brevets

(11) **EP 4 351 057 A1**

(12) **EUROPEAN PATENT APPLICATION**
published in accordance with Art. 153(4) EPC

(43) Date of publication:
**10.04.2024   Bulletin 2024/15**

(21) Application number: **22810557.3**

(22) Date of filing: **24.05.2022**

(51) International Patent Classification (IPC):
*H04L 5/00* (2006.01)          *H04B 7/14* (2006.01)
*H04W 72/00* (2009.01)

(52) Cooperative Patent Classification (CPC):
**H04B 7/14; H04B 17/30; H04L 5/00; H04W 72/00**

(86) International application number:
**PCT/CN2022/094747**

(87) International publication number:
**WO 2022/247832 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **25.05.2021   CN 202110574225**

(71) Applicant: **Vivo Mobile Communication Co., Ltd.
Dongguan, Guangdong 523863 (CN)**

(72) Inventors:
• **YANG, Kun
   Dongguan, Guangdong 523863 (CN)**
• **JIANG, Dajie
   Dongguan, Guangdong 523863 (CN)**

(74) Representative: **Murgitroyd & Company
165-169 Scotland Street
Glasgow G5 8PL (GB)**

(54)    **WIRELESS COMMUNICATION METHOD, APPARATUS AND DEVICE**

(57)    This application discloses a wireless communication method, apparatus, and device, and pertains to the field of communication technologies. The wireless communication method in an embodiment of this application includes: configuring, by a first device, N operating states for a second device; and performing, by the first device, data transmission with a third device, where the data transmission spans operating times corresponding to the N operating states of the second device; where the N operating states of the second device are states of the second device forwarding wireless signals from the first device or the third device, and N is an integer greater than 1.

FIG. 6

## Description

## CROSS-REFERENCE TO RELATED APPLICATION

This application claims priority to Chinese Patent Application No. 202110574225.8, filed in China on May 25, 2021, which is incorporated herein by reference in its entirety.

## TECHNICAL FIELD

This application relates to the field of communication technologies, and specifically, to a wireless communication method, apparatus, and device.

## BACKGROUND

With the development of wireless communication technologies, user requirements for wireless communication rate and quality are increasing. In particular, for example, in service scenarios with hotspot service coverage enhancement for VR service, AR service, and video service, using only the beamforming technology of the base station is not sufficient to provide the terminal with a sufficient communication rate. Therefore, in the foregoing case, it is also necessary to introduce an auxiliary node, for example, an intelligent surface (Intelligent Surface), into the wireless communication network to enhance the signal strength received by the terminal.

In particular, during wireless communication, the equivalent channel from the base station to the terminal varies over time due to movement of the terminal or changes in objects in the communication environment. As a result, the pre-configured frequency domain resources from the base station to the terminal may experience frequency-selective deep fading after a period of time. Therefore, it is highly necessary to utilize the intelligent surface to mitigate the problem of frequency-selective deep fading.

However, the channel estimation process for the intelligent surface is more complex than the conventional channel estimation, making it difficult to update the forwarding beam state for the intelligent surface in real time. Moreover, changes of the multipath phase and amplitude of the wireless channel are random, slow-varying over time, and affected by the movement and varying speeds of terminals and environmental objects, and therefore, in the frequency domain, if a resource block experiences the frequency-selective fading, the resource block will remain in frequency-selective fading state for a period of time thereafter, leading to deterioration in communication quality, until the multipath channel changes to another state. Due to the lengthy process of the channel estimation based on the intelligent surface and the additional time needed to update the operating state of the intelligent surface based on the channel estimation results, the operating state of the intelligent surface derived from the outdated channel information cannot achieve optimal channel enhancement performance.

Therefore, it is an urgent task in the art to find ways to control the intelligent surface to timely and efficiently, with low computational complexity, adjust the frequency-selective fading during wireless communication.

## SUMMARY

Embodiments of this application provide a wireless communication method, apparatus, and device, so as to solve the problem of how to timely and efficiently adjust the frequency-selective deep fading in a wireless communication process.

According to a first aspect, a wireless communication method is provided, where the method includes: configuring, by a first device, N operating states for a second device; and performing, by the first device, data transmission with a third device, where the data transmission spans operating times corresponding to the N operating states of the second device; where the N operating states of the second device are states of the second device forwarding wireless signals from the first device or the third device, and N is an integer greater than 1.

According to a second aspect, a wireless communication apparatus is provided, where the apparatus includes: a configuration module configured to configure N operating states for a second device; and a transmission module configured to perform data transmission with a third device, where the data transmission spans operating times corresponding to the N operating states of the second device that are configured by the configuration module; where the N operating states of the second device are states of the second device forwarding wireless signals from the first device or the third device, and N is an integer greater than 1.

According to a third aspect, a wireless communication device is provided, where the wireless communication device includes a processor, a memory, and a program or instructions stored in the memory and executable on the processor, and when the program or the instructions are executed by the processor, the steps of the method according to the first aspect are implemented.

According to a fourth aspect, a readable storage medium is provided, where the readable storage medium stores a program or instructions, and when the program or instructions are executed by a processor, the steps of the method according to the first aspect are implemented.

According to a fifth aspect, a chip is provided, where the chip includes a processor and a communication interface, the communication interface is coupled to the processor, and the processor is configured to run a program or instructions, to implement the method according to the first aspect.

According to a sixth aspect, a computer program/program product is provided, where the computer program/program product is stored in a non-volatile storage medium, and the program/program product is executed by at least one processor to implement the steps of the method according to the first aspect.

In an embodiment of this application, the first device may configure N operating states for the second device, and N is an integer greater than 1. The first device performs data transmission with the third device, and the data transmission spans operating times corresponding to the N operating states of the second device. The N operating states of the second device are states of the second device forwarding wireless signals from the first device or the third device. Thus, the second device can use at least two operating states configured by the first device for the second device to respectively forward the wireless signals from the first device or the third device, causing a change in the channel between the first device and the third device, and thereby timely and efficiently adjust the frequency-selective deep fading encountered by frequency resources scheduled by the first device, so as to ensure communication quality and efficiency.

## BRIEF DESCRIPTION OF DRAWINGS

FIG. 1 is a first schematic diagram of a communication network between a first device, a second device, and a third device according to an embodiment of this application;

FIG. 2 is a schematic principle diagram of beam forwarding between a first device, a second device, and a third device according to an embodiment of this application;

FIG. 3 is a block diagram of a wireless communication system to which embodiments of this application may be applied;

FIG. 4 is a second schematic diagram of a communication network between a first device, a second device, and a third device according to an embodiment of this application;

FIG. 5 is a third schematic diagram of a communication network between a first device, a second device, and a third device according to an embodiment of this application;

FIG. 6 is a flowchart of steps of a wireless communication method according to an embodiment of this application;

FIG. 7 is a schematic diagram of a downlink communication process in a wireless communication method according to an embodiment of this application;

FIG. 8 is a first schematic structural diagram of a wireless communication apparatus according to an embodiment of this application;

FIG. 9 is a second schematic structural diagram of a wireless communication apparatus according to an embodiment of this application;

FIG. 10 is a schematic structural diagram of a communication device according to an embodiment of this application;

FIG. 11 is a schematic diagram of a hardware structure of a terminal according to an embodiment of this application; and

FIG. 12 is a schematic structural diagram of hardware of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

For ease of understanding of the embodiments of this application, the following describes some of the terms included in the embodiments of this application.

1. Intelligent surface

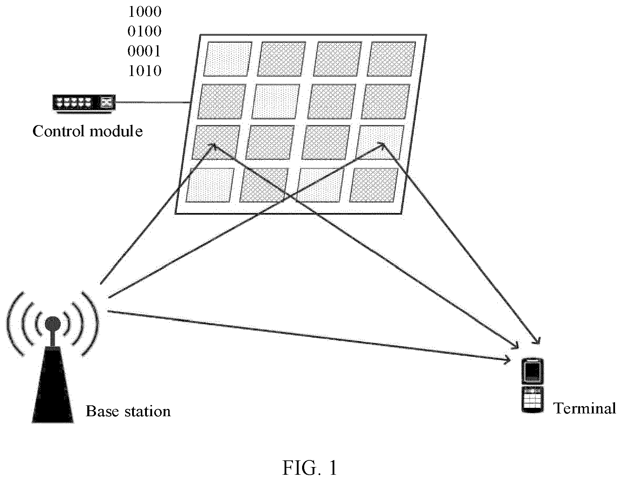

An intelligent surface (Reconfigurable Intelligent Surface, RIS) is a type of auxiliary communication device. As shown in FIG. 1, an intelligent surface is provided with a plurality of elements, where the RIS element typically has a size on sub-wavelength scale, meaning that the size of the unit cell is smaller than the wavelength corresponding to an operating frequency. The RIS elements are regularly arranged on a planar or curved surface to form an array of RIS elements. Each RIS element includes an independently controllable element that is controlled by a RIS control module in the background. Under the control of the RIS control module, the RIS elements can dynamically or semi-statically adjust their own electromagnetic properties, thereby affecting the reflection or refraction behavior of electromagnetic waves incident on the RIS elements. Thus, the intelligent surface can manipulate the reflected or refracted signals of the electromagnetic signals and thereby implement functions such as beam scanning or beamforming. Because the intelligent surface includes only passive elements, its forwarded signals maintain signal correlation with the signals transmitted by the source, and coherent superposition of multipath signals can be implemented on the receiving side. In a wireless communication network assisted by the intelligent surface, with beam training or analog beamforming, the forwarding beam from the intelligent surface can be aimed at a terminal or a region at which the terminal is located, and the deep frequency fading of the communication link can be improved by timely changing the state of the forwarding beam from the intelligent surface. In particular, for other devices with coherent forwarding of wireless signals, such as backscatter and coherent forwarding relay, the state of the forwarding signal can also be adjusted to mitigate the frequency-selective deep fading of the communication link.

2. Principle of beam control based on the intelligent surface

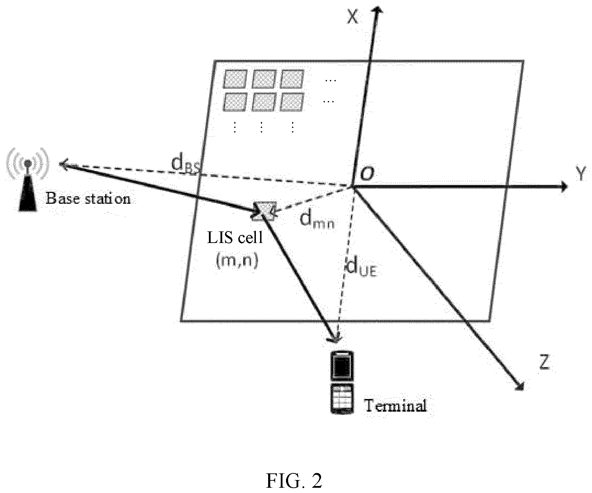

As shown in FIG. 2, the beam control principle based on the intelligent surface is as follows.

Taking a phase control intelligent surface as an example, the ideal control phase of the element (m, n) is:

$$\Delta\phi_{mn} = \frac{2\pi}{\lambda}\left(\left|\vec{d}_{BS} - \vec{d}_{mn}\right| + \left|\vec{d}_{UE} - \vec{d}_{mn}\right|\right)$$

where $\vec{d}_{BS}$, $\vec{d}_{UE}$, and $\vec{d}_{mn}$ are coordinate vectors of the base station, the terminal, and the RIS element (m, n), respectively. If the position of the terminal relative to the intelligent surface satisfies the far-field radiation condition, the signal from the intelligent surface to the terminal is approximated as a parallel signal, that is, $|\vec{d}_{UE} - \vec{d}_{mn}|$ $\approx \vec{d}_{UE} \cdot \vec{d}_{mn}$. The corresponding approximation can also be operated between the base station and the intelligent surface when the far-field radiation condition is satisfied.

For a 1-bit discrete phase control intelligent surface, the ideal compensated phase can be mapped onto a discrete phase through discretization, for example:

$$\Delta\phi'_{mn} = \begin{cases} +\pi/2 & 0 \le \Delta\phi_{mn} \bmod 2\pi < \pi \\ -\pi/2 & \pi \le \Delta\phi_{mn} \bmod 2\pi < 2\pi \end{cases}.$$

It should be noted that the technologies described in the embodiments of this application are not limited to long term evolution (Long Term Evolution, LTE)/LTE-advanced (LTE-Advanced, LTE-A) systems, and may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the foregoing systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, such as a sixth generation (6th Generation, 6G) communication system.

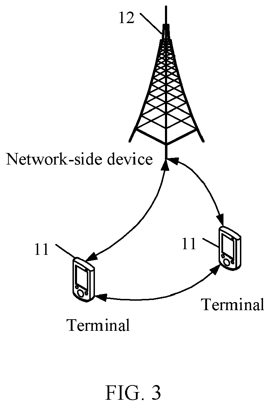

FIG. 3 is a block diagram of a wireless communication system to which the embodiments of this application may be applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or a vehicle user equipment (VUE), or a pedestrian user equipment (PUE). The wearable device includes a smart watch, a wristband, earphones, glasses, and the like. It should be noted that the terminal 11 is not limited to any particular type in the embodiments of this application. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmission reception point (Transmission Reception Point, TRP), or another appropriate term in the art. Provided that the same technical effects are achieved, the base station is not limited to a specific technical term. It should be noted that the base station in the NR system is merely used as an example in the embodiments of this application, but a specific type of the base station is not limited.

The following describes in detail a wireless communication apparatus and device provided in the embodiments of this application through some embodiments and application scenarios thereof with reference to the accompanying drawings.

In the related art, the function of analog beam scanning is provided in a 5G NR protocol. A basic process of the analog beam scanning is that a base station transmits signals with beams in different directions sequentially at different time periods, and the terminal receives signals with a fixed receive beam, and selects the most suitable transmit beam to report to the base station.

With the beam scanning process defined by 5G NR or the channel estimation and beamforming process designed for intelligent surface devices, the forwarding signal beam from the intelligent surface can be aligned with the terminal to achieve the expected reception effect. For example, it is possible to maximize the signal energy received by the terminal in the operating frequency band.

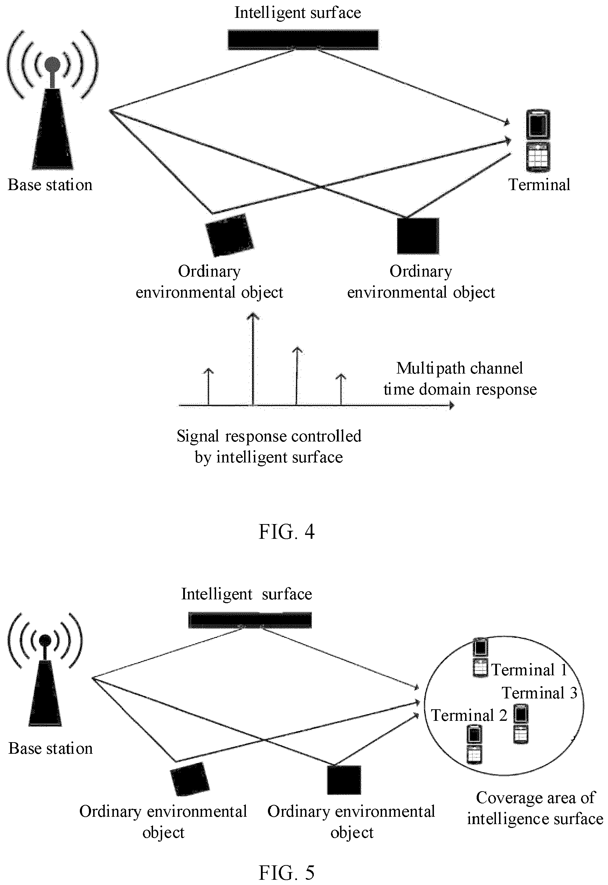

However, as shown in FIG. 4, during wireless communication, the equivalent channel from the base station to the terminal varies over time due to movement of the terminal or movement of objects in the communication environment. As a result, the pre-configured frequency domain resources from the base station to the terminal may experience frequency deep fading after a period of time.

The intelligent surface device provides some multipath signals to the terminal and can control the phase and strength of the multipath signals. Changing the phase or intensity of some multipath channels can reduce the impact of frequency-selective fading on data transmission. When complete channel information is known to the communication system, the base station can adjust the forwarding beam state of the intelligent surface so that the terminal receives the maximum signal strength on the scheduled frequency resources (that is, the forwarding signal of the intelligent surface is positively superimposed on the reflected/scattered signals from ordinary objects in a multipath environment). Therefore, with the introduction of the intelligent surface, the phase of some multipaths in the multipath channel is controlled so that the frequency-selective fading on the scheduled frequency resources can be mitigated.

With regard to the manner of the base station controlling the intelligent surface, it is attempted in the related art to use closed-loop scheduling or open-loop frequency hopping diversity technical solutions to control the intelligent surface. The closed-loop scheduling means that frequency resources not in frequency-selective deep fading are scheduled for the terminal for an uplink or downlink channel measurement. The open-loop frequency hopping diversity is to map the to-be-transmitted data onto two different time-frequency resources through frequency hopping when the current channel condition is unknown, so as to reduce the probability of encountering frequency-selective deep fading and improve the robustness of data transmission.

However, a change of the signal phase of the base station or terminal will affect the phase changes of all multipaths in the multipath environment. Therefore, current communication systems are unable to achieve the purpose of separately controlling some multipaths. Accordingly, the technical solution of closed-loop scheduling or open-loop frequency hopping diversity used in related art faces challenges in efficiently avoiding frequency-selective deep fading.

In addition, to achieve accurate control of the forwarding beam from the intelligent surface, the base station and the terminal need to carry out complex channel measurements and feedback operations. This involves calculating and transmitting to the intelligent surface the operating state of the intelligent surface based on the measurement results and scheduling corresponding frequency resources for the terminal. This closed-loop control process incurs higher time overhead and complexity compared to the closed-loop control process for the 5G NR system. The data transmission efficiency of the system is affected.

In particular, in a multi-user scenario, multiple terminals are present and need to be served within the coverage area of the forwarding beam of the intelligent surface. Because the intelligent surface can only implement analog beam forwarding, multiple users often need to share communication resources through time division multiplexing or frequency division multiplexing. Due to different multipath environments and frequency resource scheduling outcomes for the multiple terminals within a same area, phase requirements for forwarding beams from the intelligent surface also differ. It is challenging for the intelligent surface to simultaneously fulfill the communication needs of multiple users. Even if channel information for the multiple users is obtained through closed-loop channel measurements, the system may not be able to determine that the intelligent surface in an operating state simultaneously fulfills the channel requirements of all of the multiple users. As shown in FIG. 5, in a multi-user scenario (such as the scenario in FIG. 5 in which terminal 1, terminal 2, and terminal 3 are included in the coverage area of the intelligence surface), the phase requirements for the forwarding beam vary from terminal to terminal. The forwarding beams from the intelligent surface are analog beams, so the optimal beam for multiple terminals cannot be ensured simultaneously, thereby affecting the overall capacity of the wireless communication system.

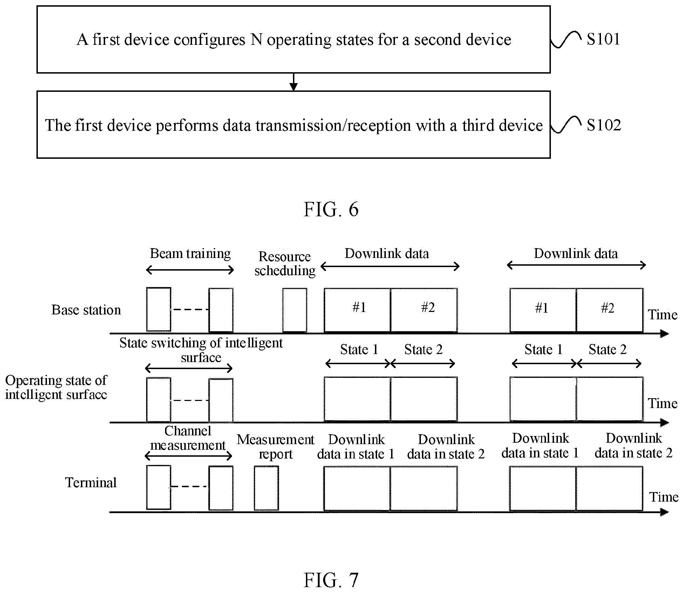

As shown in FIG. 6, to overcome the foregoing problems, an embodiment of this application provides a wireless communication method. The wireless communication method provided in this embodiment of this application includes the following S101 and S102.

S 101. A first device configures N operating states for a second device.

N is an integer greater than 1.

In this embodiment of this application, the first device may be a network device (for example, a base station) or a terminal.

In this embodiment of this application, the second device is a device for assisting the first device in wireless communication. The second device may be a coherent forwarding device or an incoherent forwarding device.

For example, the second device may be an intelligent surface device or a relay device or a backscatter device.

It should be noted that a forwarding signal from the intelligent surface device is coherent with other multipath signals, which means that the forwarding signal has a stable frequency compared with the source signal at the transmitting end. For the relay device, the frequency or phase of the amplified signal from the relay device may be randomly shifted and thus is non-coherently superimposed with the other multipath signals. In addition, the relay device is applied in scenarios for coverage extension or cell edge coverage, where the energy of other multipath signals is weak, and the performance gain from a diversity mode of forwarding signal switching is not significant. However, in hotspot enhancement scenarios, the relay device may be used to enhance the performance of a hotspot area or a user, and therefore the relay device can be used as the second device in the foregoing scenario. For the relay device, within a single data transmission time period (one or several consecutive slots), the impact introduced by the amplifier is approximated as continuous changes, so transmission diversity can be achieved. It is also possible to incorporate different phase shifter units after the amplifier to implement analog beam control and phase control, thereby achieving transmission diversity.

It can be understood that, in a case that the second device is an intelligent surface device, the N operating states of the second device may be a combination of the operating states of all the intelligent surface units in the second device.

In this embodiment of this application, the second device performs operating state switching within a slot or between slots according to the N operating states configured by the first device for the second device and the operating times corresponding to the operating states. It is to be understood that the configured N operating states of the second device may be configured to occur periodically or semi-statically, and may be configured to be dynamically indicated within a time period.

In this embodiment of this application, the second device performs the operating state switching among the N operating states within the duration of a single data transmission according to the N operating states configured by the first device for the second device.

For example, a plurality of time units may be included in the foregoing duration of the single data transmission. The second device may switch the operating state among the N operating states in each of the plurality of time units.

It can be understood that the operating states of the second device are in one-to-one correspondence with the control information or the control modes of the second device.

For example, in a case that the second device is an intelligent surface device, the N operating states of the second device may correspond to the space energy distribution states of forwarding beams of the second device.

S 102. The first device performs data transmission with a third device.

The data transmission spans operating times corresponding to the N operating states of the second device. The operating time may be several OFDM symbols or several slots.

In this embodiment of this application, the third device may be a terminal.

The N operating states of the second device are states of the second device forwarding wireless signals from the first device or the third device.

Optionally, in this embodiment of this application, different operating states in the N operating states correspond to different operating modes of the second device.

For example, the second device is an intelligent surface device. In a case that the direction of incident signals from the second device is fixed, different operating states in the N operating states of the second device can enable different forwarding beams.

In other words, different states in the N operating states correspond to different forwarding beams forwarded by the second device, and the different forwarding beams may include at least one of the following: forwarding beams with different phases, forwarding beams with different intensities, forwarding beams with different directions, forwarding beams with different widths, forwarding beams with different gains, and forwarding beams with different sidelobe energies.

Optionally, in this embodiment of this application, the wireless communication method is an open-loop diversity wireless communication method based on the second device (for example, an intelligent surface).

Optionally, in this embodiment of this application, the wireless communication method is a wireless communication method in a time domain diversity transmission mode.

Optionally, in this embodiment of this application, the second device serves as an auxiliary communication device, is controlled by the first device, and thus during uplink data transmission or downlink data transmission, performs signal forwarding operation in different time periods of the data transmission according to different operating states in the N operating states. The first device, by configuring the N operating states for the second device, may induce changes in the channel between the first device and the third device.

Optionally, in this embodiment of this application, in a case that the first device performs downlink data transmission with the third device, S 102 includes the following S 102a or S102b.

S 102a. The first device performs data transmission with the third device by mapping a redundant version of data onto time-frequency resources in a plurality of time periods.

S 102b. The first device performs data transmission with the third device by mapping at least two redundant versions onto time-frequency resources in a plurality of time periods, respectively.

It should be noted that in a case that the first device performs downlink data transmission with the third device, a switching delay of the second device between different operating states needs to be considered. For example, time domain resources occupied by the switching delay need to be considered. For example, at the symbol level switching delay, no data transmission may be performed and the third device is notified.

In this embodiment of this application, it is necessary to ensure that at least one reference signal (for example, DMRS) is used for channel estimation, demodulation, and decoding during the time period corresponding to each operating state of the second device. Thus, according to configured time periods, the third device receives downlink signals and performs channel estimation, demodulation, and decoding.

In this embodiment of this application, the first device may configure N operating states for the second device, and N is an integer greater than 1. The first device performs data transmission with the third device, and the data transmission spans operating times corresponding to the N operating states of the second device. The N operating states of the second device are states of the second device forwarding wireless signals from the first device or the third device. Thus, the second device can use at least two operating states configured by the first device for the second device to respectively forward the wireless signals from the first device or the third device, causing a change in the channel between the first device and the third device, and thereby timely and efficiently adjust the frequency-selective deep fading encountered by frequency resources scheduled by the first device, so as to ensure communication quality and efficiency.

In addition, transmission diversity can be achieved in this embodiment of this application. In a scenario in which the first device and the third device communicate via the second device, switching the operating state of the second device according to a predetermined rule during an uplink or downlink transmission can achieve the purpose of changing the channel state between the first device and the third device. The first or third device can receive uplink or downlink signals in different channel states on configured frequency resources, thereby achieving transmission diversity.

Optionally, in a multi-user scenario, different third devices have different requirements for the second device. With open-loop diversity for the operating state switching of the second device, frequent channel estimation can be avoided to ensure communication efficiency, the multi-user scheduling transmission can be flexibly supported, and it can be ensured that at least one forwarding beam from the second device provides a positive gain for a user in the multi-user communication.

Optionally, in this embodiment of this application, the first device may configure N operating states for the second device that are adapted to the situation of the second device.

For example, S101 includes the following S101a and S101b.

S101a. The first device obtains device information of the second device and channel measurement results of target channels.

It can be understood that after the second device accesses the cell (that is, the second device completes the synchronization process and maintains time-frequency synchronization with the first device), the second device reports the device information of the second device to the first device. Accordingly, the first device obtains the device information reported by the second device.

Optionally, in this embodiment of this application, the device information includes device type, where the device type includes at least one of the following: an intelligent surface with passive elements, a hybrid intelligent surface with active elements and passive elements, a relay with a coherent forwarding function of wireless signals, and a relay with a non-coherent forwarding function of wireless signals.

Optionally, in this embodiment of this application, the device information includes device function, where the device function is a manner of the second device controlling wireless signal parameters, and the device function includes at least one of the following: phase control, amplitude control, and polarization direction control.

Optionally, in this embodiment of this application, the device information includes device control quantization precision, where the device control quantization precision is to control wireless signal parameters by n-bit control information, n being an integer greater than or equal to 1.

For example, it is assumed that the device function of the second device includes a phase control function, and that the device control quantization precision of the second device is to control wireless signal parameters by 1-bit control information. Accordingly, it may be considered that the control information "0" of the second device corresponds to the phase of a signal reflected from the second device being continuous with the phase of an incident signal, and the control information "1" of the second device corresponds to the phase of a signal reflected from the second device having a phase difference of 180° from the phase of an incident signal; or it may be considered that the phase of a signal reflected from the second device corresponding to the control information "0" has a phase difference of 180° from the phase of a signal reflected from the second device corresponding to the control information "1".

For example, it is assumed that the device function of the second device includes a phase control function, and that the device control quantization precision of the second device is to control wireless signal parameters by control information greater than 1 bit. Then, the first device may obtain the device information of the second device through a product specification or a protocol definition or an active report from the second device. Thus, the phase state of the forwarding signal corresponding to each bit information can be determined.

In this embodiment of this application, the target channels are wireless channels between the second device and the first device or the third device.

Optionally, in this embodiment of the application, the target channels include S first channels between the second device and S third devices, one third device corresponding to one first channel, where the channel measurement results are obtained based on channel measurement results of the S first channels, and S is an integer greater than 1.

It can be understood that the channel measurement results of the target channels may be obtained through a channel measurement algorithm.

In one example, in a case that the second device is an intelligent surface, the foregoing channel measurement results may be obtained based on analog beam scanning by the second device.

In another example, in a case that the second device is an intelligent surface, the foregoing channel measurement results may be obtained through channel decomposition based on the channel sparsity by the second device.

S101b. The first device configures the N operating states for the second device based on the device information and the channel measurement results.

In this embodiment of this application, based on the device information, the first device may obtain the number of operating states to be configured for the second device; and based on the foregoing channel measurement results, the first device may obtain a set of operating states to be configured for the second device.

In this way, the first device may, based on the device information of the second device and the channel measurement results, configure operating states for the second device that are adapted to the situation of the second device, to achieve the purpose of further improving the communication efficiency and quality between the first device and the third device via the second device.

Optionally, in this embodiment of this application, before S101b, the wireless communication method includes the following S103 or S104.

S103. The first device transmits P reference signals to the third device.

S104. The first device receives the P reference signals transmitted by the third device.

The P reference signals are signals that have been forwarded by the second device using the P predefined operating states, respectively.

In this embodiment of this application, the target channels include channels corresponding to the P reference signals.

In this embodiment of this application, P is an integer greater than or equal to 1.

It can be understood that to perform channel measurement through analog beam scanning, the first device or the third device needs to transmit the foregoing reference signals to each other several times during the channel measurement phase. The foregoing reference signals are forwarded by the second device between the first device and the third device.

The second device has a plurality of predefined operating states (which may be understood as fixed operating states).

In an example, it is assumed that the first device transmits P reference signals to the third device. Accordingly, after receiving the P reference signals from the first device, the second device forwards the P reference signals to the third device by using each of the P predefined operating states, respectively.

In another example, it is assumed that the first device receives the P reference signals transmitted by the third device. Accordingly, after receiving the P reference signals from the third device, the second device forwards the P reference signals to the first device by using each of the P predefined operating states, respectively.

In this way, the first device may determine, based on the P reference signals forwarded by the second device, the communication quality in the P predefined operating states of the second device, and accordingly configure N operating states for the second device that are adapted to the second device.

Optionally, in this embodiment of this application, a transmit time interval between any two of the P reference signals is greater than an operating state switching time required by the second device.

In this embodiment of this application, taking into account the time for the second device to perform operating state switching among the N operating states, the first device needs to satisfy the foregoing predetermined time interval when receiving or transmitting the reference signals, which means that the transmit time interval between any two of the P reference signals is greater than the operating state switching time required by the second device.

Optionally, in this embodiment of this application, based on S103 or S104, S101b includes the following S101b1:

S101b1. The first device selects one of the P predefined operating states of the second device to generate the N operating states.

In this embodiment of this application, the first device may select one operating state with the best communication quality from the P predefined operating states of the second device, and generate N operating states based on the operating state.

Optionally, in this embodiment of this application, based on S103 or S104, S101b includes the following S101b2:

S101b2. The first device selects the N operating states from the P predefined operating states of the second device.

In this embodiment of this application, the first device may select several operating states with relatively good communication quality from the P predefined operating states of the second device, and uses the several operating states as the foregoing N operating states.

Optionally, in this embodiment of this application, based on S103 or S104, S101b includes the following S101b3:

S101b3. The first device dynamically generates the N operating states based on the measurement results of the P reference signals.

In this embodiment of this application, the first device may dynamically generate the N operating states based on the measurement results of the P reference signals.

Optionally, in this embodiment of this application, based on S103 or S104, S101b includes at least one of the following S101b4 to S101b6.

S101b4. The first device determines the number of candidate operating states based on the device information.

In this embodiment of this application, the number of candidate operating states may be one or more.

Optionally, in this embodiment of this application, in a case that the number of candidate operating states is one, the candidate operating state is an operating state with the best communication quality.

S101b5. The first device sets, based on the number, at least one first offset for target predefined operating states corresponding to the target reference signal.

In this embodiment of this application, the foregoing offset is determined by the first device based on candidate operating states and the number thereof.

Optionally, in this embodiment of this application, in a case that the second device is an intelligent surface, a corresponding offset may be set for each element of the second device.

S101b6. The first device configures operating time lengths, periods, and order of occurrence corresponding to the N operating states for the second device.

The target reference signal is at least one reference signal selected from the P reference signals based on the channel measurement results.

It can be understood that the at least one reference signal is a signal with superior signal quality in the P reference signals.

The N operating states include the target predefined operating states and the target predefined operating states with first offset setting.

It can be understood that a spatial energy distribution of a signal forwarded in the target predefined operating states with the first offset setting remains unchanged from the spatial energy distribution of the signal forwarded in the target predefined operating state, but the phase between the two changes correspondingly.

For example, it is assumed that the device control quantization precision for the second device is to control wireless signal parameters by 1-bit control information, and that the second device has N elements. Then, through beam scanning, a target predefined operating state corresponding to the optimal beam forwarded by the second device can be determined as: $\Phi_{opt} = \{b_0, b_1 \cdots b_{N-1}\}$, where $b_i$ represents the control information for the i-th element. Correspondingly, in a case that the offset is 1, the target predefined operating state with the first offset set is: $\Phi'_{opt} = \Phi_{opt} \oplus 1 = \{b_0 \oplus 1, b_1 \oplus 1 \cdots b_{N-1} \oplus 1\}$.

In this way, the first device may select an operating state of the second device corresponding to the measurement result with the best signal quality in the channel measurement results as the target predefined operating state and apply an offset to the operating state to obtain the foregoing N operating states, enabling the first device to configure operating time lengths, periods, and order of occurrence corresponding to the N operating states for the second device.

Optionally, in this embodiment of this application, in a multi-user scenario, a plurality of channel measurement results for a plurality of users in an area or in a direction may be obtained during the channel measurement phase, and the plurality of measurement results may be processed (for example, weighted averaged) to obtain a channel measurement result for the multi-user scenario.

Optionally, in this embodiment of this application, in the multi-user scenario, at the channel measurement stage, users with similar channel measurement results may be grouped together, and after grouping the users, the channel measurement results of the users in each group may be weighted averaged to obtain the channel measurement results for the multi-group user scenario. In addition, the grouping results may also be used as auxiliary information for subsequent resource scheduling.

Optionally, in this embodiment of this application, S101b includes the following S101b7 to S101b9.

S101b7. The first device determines M beam directions of forwarding signals from the second device based on the channel measurement results.

One beam direction corresponds to at least one operating state. M is greater than or equal to 1.

It can be understood that due to the influence of multipath signals, the first device may determine a plurality of signal directions for the second device, and the energy intensity of each signal direction may be different.

S101b8. The first device determines the N operating states according to the beam directions.

S101b9. The first device configures the N operating states for the second device.

Optionally, in this embodiment of this application, S101b8 may include setting, in a case that the beam directions are one beam direction, at least one second offset for a first operating state corresponding to the one beam direction.

The N operating states include the first operating state and the first operating state with second offset setting.

In other words, if the first device uses a single signal direction or the direction with the strongest signal as the beam direction of forwarding signals from the second device, candidate operating states of the second device may be generated in an offset-based manner.

Optionally, in this embodiment of this application, in a case that the beams direction are at least two beam directions, the N operating states include operating states corresponding to each of the at least two beam directions.

In other words, the first device can use a plurality of signal directions to generate candidate operating states of the second device respectively.

Optionally, in this embodiment of this application, in a multi-user scenario, the first device may, based on the channel measurement results of the respective terminals, group the third devices with similar signal directions together and configure same candidate operating states for the second device shared by the group.

In this embodiment of this application, uplink data transmission as well as downlink data transmission can be performed between the first device and the third device. FIG. 7 is a schematic diagram of a downlink communication process in a wireless communication method according to an embodiment of this application. It can be understood that the first device configures N operating states for the second device in essentially the same way during the uplink data transmission and the downlink data transmission.

The difference between the uplink data transmission and the downlink data transmission process is in the channel measurement phase, where the third device transmits an uplink reference signal, and the first device detects the uplink reference signal and performs a channel estimation to determine candidate operating states for the second device.

It can be understood that in a multi-user scenario, uplink reference signals from a plurality of third devices are multiplexed using a method such as time division, frequency division, or code division.

Optionally, in this embodiment of this application, uplink and downlink channel training and data transmission can be configured in combination. This means that downlink reference signals can be used for channel training before uplink data is transmitted, or alternatively, uplink reference signals can be used for channel training before downlink data is transmitted.

Optionally, in this embodiment of this application, the wireless communication method further includes the following S105:

S105. The first device configures time resources for a single data transmission for the third device before the first device communicates wirelessly with the third device via the second device.

The time resources include a plurality of time periods, the plurality of time periods corresponding to time periods of the N operating states, respectively.

In this embodiment of this application, the first device needs to configure parameters for data transmission for the second device and the third device, respectively.

The parameters for data transmission that the first device needs to configure for the second device are the foregoing N operating states and time periods corresponding to the N operating states (that is, rules of switching between the N operating states in different time periods). The time periods may be a plurality of symbols or a plurality of slots or a plurality of subframes. The second device adjusts its operating states according to the configuration provided by the first device.

The parameters for data transmission that the first device needs to configure for the third device are frequency resources. Also, the first device instructs the second device to use a transmission diversity mode of operating state switching to forward data or signals. Specifically, in a single data transmission, the first device configures time resources for the single data transmission for the third device. The time resources include a plurality of time periods corresponding to time periods of candidate operating states of the second device, respectively.

Optionally, in this embodiment of this application, when the first device configures resources for a transmission for the third device, it is not necessary to indicate whether the transmission is an ordinary transmission or a transmission based on the operating state switching of the second device.

Optionally, in this embodiment of this application, it can be ensured that at least one reference signal (for example, DMRS) is used for channel estimation and decoding in the time period corresponding to each operating state of the second device. Therefore, the third device does not need to perform channel measurement and feedback.

In this way, the first device reasonably configures the data transmission parameters required by the second device and the third device in the wireless communication, respectively, to ensure that the second device and the third device are coordinately adapted to each other to improve data transmission quality and efficiency.

It should be noted that the execution order of the foregoing S105 is not limited in this embodiment of this application. In one manner, S101 may be performed before S105; or, in another manner, S105 may be performed before S101.

Optionally, in this embodiment of this application, the wireless communication method further includes the following S106:

S106. In a case that the first device performs downlink data transmission with the third device, the first device notifies the third device of at least one of the following: diversity mode on, time period configuration for the diversity mode, configuration predefined in a protocol, and dynamic or semi-persistent configuration.

In this way, by notifying the third device of the relevant state or information for the diversity mode, the first device may enable the third device to better cooperate with the second device based on the foregoing relevant state or information for the diversity mode, so as to further achieve the purpose of improving communication quality.

It should be noted that the execution order of the foregoing S106 is not limited in this embodiment of this application. In one manner, S106 may be performed before S102; or, in another manner, S102 and S106 may be performed synchronously.

Optionally, in this embodiment of this application, the wireless communication method further includes the following S107:

S107. The first device obtains an operating state switching time period of the second device determined by the third device.

The switching time period is determined based on at least one of the following: configuration information of dynamic scheduling information, semi-persistent configuration information of radio resource control RRC or media access control control element MAC CE signaling, and information predefined in a protocol.

It should be noted that the execution order of the foregoing S107 is not limited in this embodiment of this application. In one manner, S102 and S107 may be performed synchronously.

It should be noted that, for the wireless communication method provided in the embodiments of this application, the execution body may be a wireless communication apparatus, or a control module for executing the wireless communication method in the wireless communication apparatus. In this embodiment of this application, a wireless communication apparatus performing the wireless communication method is used as an example to describe the wireless communication apparatus provided in the embodiments of this application.

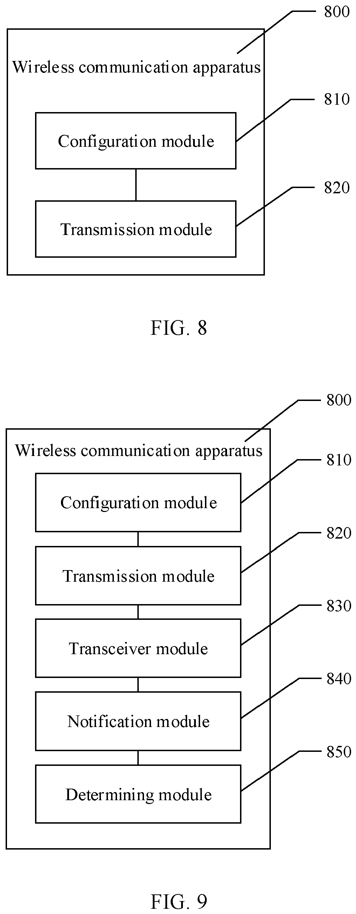

As shown in FIG. 8, an embodiment of this application provides a wireless communication apparatus 800, where the wireless communication apparatus 800 includes:

a configuration module 810 configured to configure N operating states for a second device; and
a transmission module 820 configured to perform data transmission with a third device, where the data transmission spans operating times corresponding to the N operating states of the second device that are configured by the configuration module 810.

The N operating states of the second device are states of the second device forwarding wireless signals from the first device or the third device, and N is an integer greater than 1.

In this embodiment of this application, the wireless communication apparatus 800 enables the first device to configure the N operating states for the second device, and N is an integer greater than 1. The first device performs data transmission with the third device, and the data transmission spans operating times corresponding to the N operating states of the second device. The N operating states of the second device are states of the second device forwarding wireless signals from the first device or the third device. Thus, the second device can use at least two operating states configured by the first device for the second device to respectively forward the wireless signals from the first device or the third device, causing a change in the channel between the first device and the third device, and thereby timely and efficiently adjust the frequency-selective deep fading encountered by frequency resources scheduled by the first device, so as to ensure communication quality and efficiency.

Optionally, in this embodiment of this application, the configuration module 810 is specifically configured to:

obtain device information of the second device and channel measurement results of target channels; and
configure N operating states for the second device based on the device information and the channel measurement results; where
the target channels are wireless channels between the second device and the first device or the third device.

Optionally, in this embodiment of this application, the device information includes at least one of the following:

device type, where the device type includes at least one of the following: an intelligent surface with passive elements, a hybrid intelligent surface with active elements and passive elements, a relay with a coherent forwarding function of wireless signals, and a relay with a non-coherent forwarding function of wireless signals;
device function, where the device function is a manner of the second device controlling wireless signal parameters, and the device function includes at least one of the following: phase control, amplitude control, and polarization direction control; and
device control quantization precision, where the device control quantization precision is to control wireless signal parameters by n-bit control information, n being an integer greater than or equal to 1.

As shown in FIG. 9, optionally, in this embodiment of this application, the wireless communication apparatus 800 further includes:

a transceiver module 830 configured to transmit P reference signals to the third device or receive P reference signals transmitted by the third device before the configuration module 810 configures N operating states for the second device based on the device information and the channel measurement results, where

the P reference signals are signals that have been forwarded by the second device using the P predefined operating states, respectively,

the target channels include channels corresponding to the P reference signals; and

P is an integer greater than or equal to 1.

Optionally, in this embodiment of this application, a transmit time interval between any two of the P reference signals is greater than an operating state switching time required by the second device.

Optionally, in this embodiment of this application, the configuration module 810 is specifically configured to:

select one of the P predefined operating states of the second device to generate the N operating states; or

select the N operating states from the P predefined operating states of the second device; or

dynamically generate the N operating states based on the measurement results of the P reference signals.

Optionally, in this embodiment of this application, the configuration module 810 is specifically configured to perform at least one of the following:

determine the number of candidate operating states based on the device information;

set, based on the number, at least one first offset for target predefined operating states corresponding to the target reference signal; and

configure operating time lengths, periods, and order of occurrence corresponding to the N operating states for the second device; where

the target reference signal is at least one reference signal selected from the P reference signals based on the channel measurement results; and

the N operating states include the target predefined operating states and the target predefined operating states with first offset setting.

Optionally, in this embodiment of this application, the configuration module 810 is specifically configured to:

determine M beam directions of forwarding signals from the second device based on the channel measurement results, one beam direction corresponding to at least one operating state;

determine the N operating states according to the beam directions; and

configure the N operating states for the second device; where

M is greater than or equal to 1.

Optionally, in this embodiment of this application, the configuration module 810 is specifically configured to:

set, in a case that the beam directions are one beam direction, at least one second offset for a first operating state corresponding to the one beam direction, where

the N operating states include the first operating state and the first operating state with the second offset setting.

Optionally, in this embodiment of this application, in a case that the beam directions are at least two beam directions, the N operating states include operating states corresponding to each of the at least two beam directions.

Optionally, in this embodiment of the application, the target channels include S first channels between the second device and S third devices, one third device corresponding to one first channel, where

the channel measurement results are obtained based on channel measurement results of the S first channels, and

S is an integer greater than 1.

Optionally, in this embodiment of this application, the configuration module 810 is further configured to:

configure time resources for a single data transmission for the third device before the first device communicates wirelessly with the third device via the second device, where

the time resources include a plurality of time periods, the plurality of time periods corresponding to time periods of the N operating states, respectively.

As shown in FIG. 9, optionally, in this embodiment of this application, the wireless communication apparatus 800 further includes:

a notification module 840 configured to: in a case that the first device performs downlink data transmission with the third device, notify the third device of at least one of the following: diversity mode on, time period configuration for the diversity mode, configuration predefined in a protocol, and dynamic or semi-persistent configuration.

Optionally, in this embodiment of this application, different states in the N operating states correspond to different forwarding beams forwarded by the second device, and the different forwarding beams include at least one of the following:

forwarding beams with different phases, forwarding beams with different intensities, forwarding beams with different directions, forwarding beams with different widths, forwarding beams with different gains, and forwarding beams with different sidelobe energies.

Optionally, in this embodiment of this application, the first device is a network device or a terminal, the third device is a terminal device, and the second device is an intelligent surface device or a relay device or a backscatter device.

Optionally, in this embodiment of this application, the transmission module 820 is further configured to: transmit scheduling data information to the third device before transmitting data to the third device, the scheduling data information being used to indicate that the diversity for the operating states of the second device is on.

Optionally, in this embodiment of this application, the transmission module 820 is specifically configured to:

in a case that the first device performs downlink data transmission with the third device, perform data transmission with the third device by mapping a redundant version of data onto time-frequency resources in a plurality of time periods; or
in a case that the first device performs downlink data transmission with the third device, perform data transmission with the third device by mapping at least two redundant versions onto time-frequency resources in a plurality of time periods, respectively.

As shown in FIG. 9, optionally, in this embodiment of this application, the wireless communication apparatus 800 further includes:

a determining module 850 configured to obtain an operating state switching time period of the second device determined by the third device, where
the switching time period is determined based on at least one of the following: configuration information of dynamic scheduling information, semi-persistent configuration information of RRC or MAC CE signaling, and information predefined in a protocol.

The wireless communication apparatus in this embodiment of this application may be an apparatus, an apparatus or first device with an operating system, or a component, integrated circuit, or chip in the first device. The apparatus or first device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The wireless communication apparatus provided in this embodiment of this application is capable of implementing the processes implemented in the method embodiment shown in FIG. 6, with the same technical effects achieved. To avoid repetition, details are not described herein again.

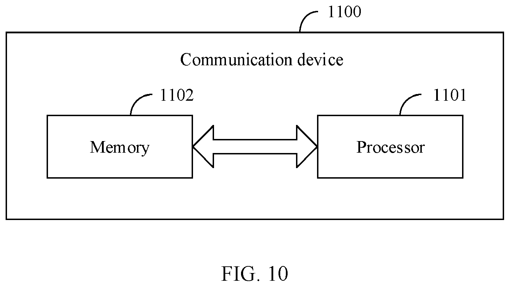

Optionally, as shown in FIG. 10, an embodiment of this application further provides a communication device 1100, including a processor 1101, a memory 1102, and a program or instructions stored in the memory 1102 and executable on the processor 1101. For example, when the communication device 1100 is a terminal, and the program or the instructions are executed by the processor 1101, the processes of the foregoing embodiments of the wireless communication method are implemented, with the same technical effects achieved. When the communication device 1100 is a network-side device, and the program or the instructions are executed by the processor 1101, the processes of the foregoing embodiments of the wireless communication method are implemented, with same technical effects achieved. To avoid repetition, details are not described herein again.

An embodiment of this application further provides a wireless communication device including a processor and a communication interface. The processor is configured to configure N operating states for a second device, and the communication interface is configured to perform data transmission with a third device, where the data transmission spans operating times corresponding to the N operating states of the second device. The N operating states of the second device are states of the second device forwarding wireless signals from the first device or the third device, and N is an integer greater than 1.

This wireless communication device embodiment corresponds to the foregoing method embodiment. The implementation processes and implementations of the foregoing method embodiment are applicable to the wireless communication device embodiment, with the same technical effects achieved.

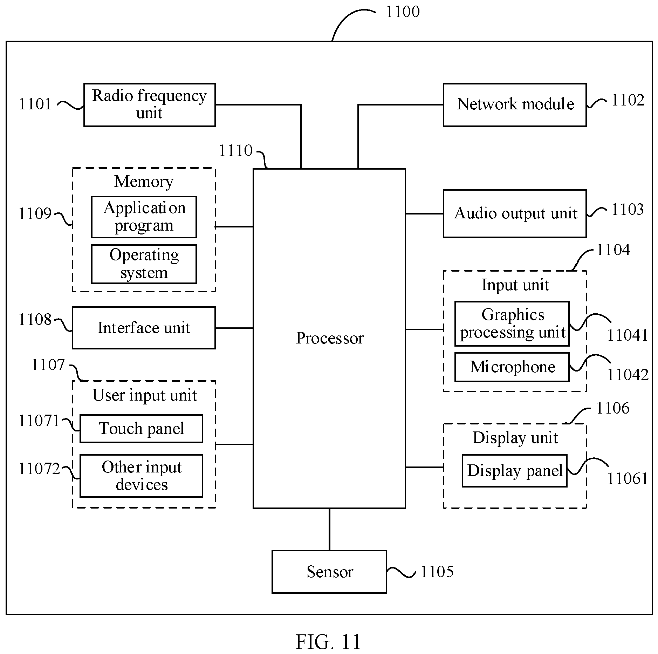

Specifically, FIG. 11 is a schematic diagram of a hardware structure of a wireless communication device according to an embodiment of this application. The wireless communication device 1100 includes but is not limited to at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the wireless communication device 1100 may further include a power supply (for example, a battery) that supplies power to various components. The power supply may be logically connected to the processor 1110 via a power management system, so that functions such as charge and discharge management and power consumption management are implemented via the power management system. The structure of the terminal shown in FIG. 11 does not constitute any limitation on the terminal, and the terminal may include more or fewer components than shown in the figure, or combine some of the components, or have different arrangements of the components. Details are not described herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode display, or the like. The user input unit 1107 includes a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a functional button (such as a volume control button or a power on/off button), a trackball, a mouse, and a joystick. Details are not described herein.

In this embodiment of this application, the radio frequency unit 1101 transmits downlink information received from a network-side device to the processor 1110 for processing, and in addition, transmits uplink data to the network-side device. Generally, the radio frequency unit 1101 includes but is not limited to an antenna, at least one amplifier, a transceiver, a coupler, a low noise amplifier, and a duplexer.

The memory 1109 may be configured to store software programs or instructions and various data. The memory 1109 may include a program or instruction storage area and a data storage area. The program or instruction storage area may store an operating system, an application program or instruction required by at least one function (for example, a sound playback function or an image playback function), and the like. In addition, the memory 1109 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 1110 may include one or more processing units. Optionally, the processor 1110 may integrate an application processor and a modem processor. The application processor mainly processes an operating system, a user interface, an application program or instructions, and the like. The modem processor mainly processes wireless communication, and for example, may be a baseband processor. It can be understood that the modem processor may be alternatively not integrated in the processor 110.

The processor 110 is configured to configure N operating states for the second device and perform data transmission with a third device, where the data transmission spans operating times corresponding to the N operating states of the second device; where the N operating states of the second device are states of the second device forwarding wireless signals from the first device or the third device, and N is an integer greater than 1.

In this embodiment of this application, the processor 110 enables the first device to configure the N operating states for the second device, and N is an integer greater than 1. The first device performs data transmission with the third device, and the data transmission spans operating times corresponding to the N operating states of the second device. The N operating states of the second device are states of the second device forwarding wireless signals from the first device or the third device. Thus, the second device can use at least two operating states configured by the first device for the second device to respectively forward the wireless signals from the first device or the third device, causing a change in the channel between the first device and the third device, and thereby timely and efficiently adjust the frequency-selective deep fading encountered by frequency resources scheduled by the first device, so as to ensure communication quality and efficiency.

An embodiment of this application further provides a network-side device including a processor and a communication interface. The processor is configured to configure N operating states for a second device, and the communication interface is configured to perform data transmission with a third device, where the data transmission spans operating times corresponding to the N operating states of the second device; where the N operating states of the second device are states of the second device forwarding wireless signals from the first device or the third device, and N is an integer greater than 1. The network-side device embodiment corresponds to the foregoing method embodiment. The implementation processes and implementations of the foregoing method embodiment are applicable to the network-side device embodiment, with the same technical effects achieved.

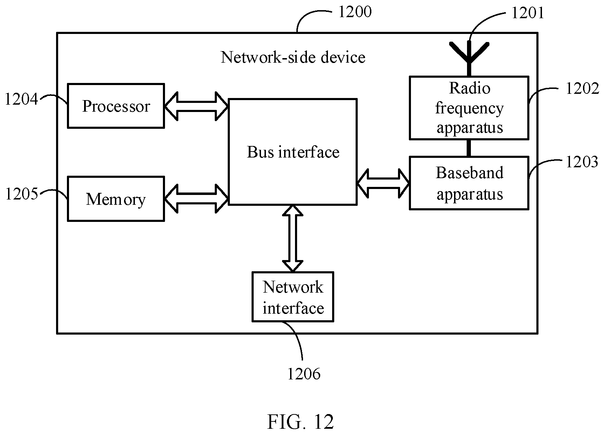

Specifically, an embodiment of this application further provides a network-side device. As shown in FIG. 12, the network-side device 1200 includes an antenna 1201, a radio frequency apparatus 1202, and a baseband apparatus 1203. The antenna 1201 is connected to the radio frequency apparatus 1202. In an uplink direction, the radio frequency apparatus 1202 receives information by using the antenna 1201, and transmits the received information to the baseband apparatus 1203 for processing. In a downlink direction, the baseband apparatus 1203 processes to-be-transmitted information, and transmits the information to the radio frequency apparatus 1202; and the radio frequency apparatus 1202 processes the received information and then transmits the information by using the antenna 1201.

The frequency band processing apparatus may be located in the baseband apparatus 1203. The method performed by the network-side device in the foregoing embodiment may be implemented in the baseband apparatus 1203, and the baseband apparatus 1203 includes a processor 1204 and a memory 1205.

The baseband apparatus 1203 may include, for example, at least one baseband processing unit, where a plurality of chips are disposed on the baseband processing unit. As shown in FIG. 12, one of the chips is, for example, the processor 1204, and connected to the memory 1205, to invoke the program in the memory 1205 to perform the operations of the network device shown in the foregoing method embodiment.

The baseband apparatus 1203 may further include a network interface 1206 configured to exchange information with the radio frequency apparatus 1202, where the interface is, for example, a common public radio interface (common public radio interface, CPRI for short).

Specifically, the network-side device in this embodiment of the present invention further includes instructions or a program stored in the memory 1205 and executable on the processor 1204. The processor 1204 invokes the instructions or program in the memory 1205 to perform the method performed by the modules shown in FIG. 8 and FIG. 9, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the wireless communication method are implemented, with the same technical effects achieved. To avoid repetition, details are not described herein again.

The processor is a processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the wireless communication method, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the methods in the foregoing embodiments may be implemented by software with a necessary general hardware platform. Certainly, the methods in the foregoing embodiments may also be implemented by hardware. However, in many cases, the former is a preferred implementation. Based on such an understanding, the technical solutions of this application essentially, or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

Embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A wireless communication method, comprising:

    configuring, by a first device, N operating states for a second device; and
    performing, by the first device, data transmission with a third device, wherein the data transmission spans operating times corresponding to the N operating states of the second device; wherein

the N operating states of the second device are states of the second device forwarding wireless signals from the first device or the third device, and N is an integer greater than 1.

2. The wireless communication method according to claim 1, wherein the configuring, by a first device, N operating states for a second device comprises:

obtaining, by the first device, device information of the second device and channel measurement results of target channels; and

configuring, by the first device based on the device information and the channel measurement results, the N operating states for the second device, wherein

the target channels are wireless channels between the second device and the first device or the third device.

3. The wireless communication method according to claim 2, wherein the device information comprises at least one of following:

device type, wherein the device type comprises at least one of following: an intelligent surface with passive elements, a hybrid intelligent surface with active elements and passive elements, a relay with a coherent forwarding function of wireless signals, and a relay with a non-coherent forwarding function of wireless signals;

device function, wherein the device function is a manner of the second device controlling wireless signal parameters, and the device function comprises at least one of following: phase control, amplitude control, and polarization direction control; and

device control quantization precision, wherein the device control quantization precision is to control wireless signal parameters by n-bit control information, n being an integer greater than or equal to 1.

4. The wireless communication method according to claim 2, wherein before the configuring, by the first device based on the device information and the channel measurement results, the N operating states for the second device, the method further comprises:

transmitting, by the first device, P reference signals to the third device or receiving, by the first device, P reference signals transmitted by the third device; wherein

the P reference signals are signals that have been forwarded by the second device using P predefined operating states, respectively;

the target channels comprise channels corresponding to the P reference signals; and

P is an integer greater than or equal to 1.

5. The wireless communication method according to claim 4, wherein a transmit time interval between any two of the P reference signals is greater than an operating state switching time required by the second device.

6. The wireless communication method according to claim 4, wherein the configuring, by the first device, the N operating states for the second device based on the device information and the channel measurement results comprises:

selecting, by the first device, one of the P predefined operating states of the second device to generate the N operating states; or

selecting, by the first device, the N operating states from the P predefined operating states of the second device; or

dynamically generating, by the first device based on measurement results of the P reference signals, the N operating states.

7. The wireless communication method according to claim 4, wherein the configuring, by the first device, the N operating states for the second device based on the device information and the channel measurement results comprises at least one of following:

determining, by the first device based on the device information, a number of candidate operating states;

setting, by the first device based on the number, at least one first offset for target predefined operating states corresponding to target reference signal; and

configuring, by the first device, operating time lengths, periods, and order of occurrence corresponding to the N operating states for the second device; wherein

the target reference signal is at least one reference signal selected from the P reference signals based on the channel measurement results; and

the N operating states comprise the target predefined operating states and the target predefined operating states with first offset setting.

8. The wireless communication method according to claim 2, wherein the configuring, by the first device, the N operating states for the second device based on the device information and the channel measurement results comprises:

determining, by the first device based on the channel measurement results, M beam directions of forwarding signals from the second device, one beam direction corresponding to at least one operating state;

determining, by the first device, the N operating states according to the beam directions; and configuring, by the first device, the N operating states for the second device; wherein

M is greater than or equal to 1.

9. The wireless communication method according to claim 8, wherein the determining, by the first device, the N operating states according to the beam directions comprises:

setting, in a case that the beam directions are one beam direction, at least one second offset for a first operating state corresponding to the one beam direction, wherein

the N operating states comprise the first operating state and the first operating state with second offset setting.

10. The wireless communication method according to claim 8, wherein in a case that the beam directions are at least two beam directions, the N operating states comprise operating states corresponding to each of the at least two beam directions.

11. The wireless communication method according to any one of claims 2 to 10, wherein the target channels comprise S first channels between the second device and S third devices, one third device corresponding to one first channel; wherein

the channel measurement results are obtained based on channel measurement results of the S first channels, and

S is an integer greater than 1.

12. The wireless communication method according to any one of claims 1 to 10, wherein the method further comprises:

configuring, by the first device, time resources for a single data transmission for the third device before the first device communicates wirelessly with the third device via the second device; wherein

the time resources comprise a plurality of time periods, the plurality of time periods corresponding to time periods of the N operating states, respectively.

13. The wireless communication method according to any one of claims 1 to 10, wherein the method further comprises:

in a case that the first device performs downlink data transmission with the third device, notifying, by the first device, the third device of at least one of following: diversity mode on, time period configuration for the diversity mode, configuration predefined in a protocol, and dynamic or semi-persistent configuration.

14. The wireless communication method according to any one of claims 1 to 10, wherein different states in the N operating states correspond to different forwarding beams forwarded by the second device, and the different forwarding beams comprise at least one of following:

forwarding beams with different phases, forwarding beams with different intensities, forwarding beams with different directions, forwarding beams with different widths, forwarding beams with different gains, and forwarding beams with different sidelobe energies.

15. The wireless communication method according to any one of claims 1 to 10, wherein the first device is a network device or a terminal, the third device is a terminal device, and the second device is an intelligent surface device or a relay device or a backscatter device.

16. The wireless communication method according to any one of claims 1 to 10, wherein the first device transmits scheduling data information to the third device before the first device transmits data to the third device, the scheduling data information being used to indicate that diversity for operating states of the second device is on.

17. The wireless communication method according to any one of claims 1 to 10, wherein in a case that the first device performs downlink data transmission with the third device, the performing, by the first device, data transmission with a third device comprises:

performing, by the first device, data transmission with the third device by mapping a redundant version of data onto time-frequency resources in a plurality of time periods; or

performing, by the first device, data transmission with the third device by mapping at least two redundant versions onto time-frequency resources in a plurality of time periods, respectively.

18. The wireless communication method according to any one of claims 1 to 10, wherein the method further comprises:

obtaining, by the first device, an operating state switching time period of the second device determined by the third device, wherein

the switching time period is determined based on at least one of following: configuration information of dynamic scheduling information, semi-persistent configuration information of radio resource control RRC or media access control control element MAC CE signaling, and information predefined in a protocol.

19. A wireless communication apparatus, wherein the apparatus comprises:

a configuration module configured to configure N operating states for a second device; and
a transmission module configured to perform data transmission with a third device, wherein the data transmission spans operating times corresponding to the N operating states of the second device that is configured by the configuration module; wherein
the N operating states of the second device are states of the second device forwarding wireless signals from the first device or the third device, and N is an integer greater than 1.

20. The wireless communication apparatus according to claim 19, wherein the configuration module is specifically configured to:

obtain device information of the second device and channel measurement results of target channels; and
configure N operating states for the second device based on the device information and the channel measurement results, wherein
the target channels are wireless channels between the second device and the first device or the third device.

21. The wireless communication apparatus according to claim 20, wherein the device information comprises at least one of following:

device type, wherein the device type comprises at least one of following: an intelligent surface with passive elements, a hybrid intelligent surface with active elements and passive elements, a relay with a coherent forwarding function of wireless signals, and a relay with a non-coherent forwarding function of wireless signals;
device function, wherein the device function is a manner of the second device controlling wireless signal parameters, and the device function comprises at least one of following: phase control, amplitude control, and polarization direction control; and
device control quantization precision, wherein the device control quantization precision is to control wireless signal parameters by n-bit control information, n being an integer greater than or equal to 1.

22. The wireless communication apparatus according to claim 20, wherein the apparatus further comprises:

a transceiver module configured to transmit P reference signals to the third device or receive P reference signals transmitted by the third device before the configuration module configures N operating states for the second device based on the device information and the channel measurement results, wherein
the P reference signals are signals that have been forwarded by the second device using P predefined operating states, respectively;
the target channel comprises channels corresponding to the P reference signals; and
P is an integer greater than or equal to 1.

23. The wireless communication apparatus according to claim 22, wherein a transmit time interval between any two of the P reference signals is greater than an operating state switching time required by the second device.

24. The wireless communication apparatus according to claim 22, wherein the configuration module is specifically configured to:

select one of the P predefined operating states of the second device to generate the N operating states; or
select the N operating states from the P predefined operating states of the second device; or
dynamically generate the N operating states based on measurement results of the P reference signals.

25. The wireless communication apparatus according to claim 22, wherein the configuration module is specifically configured to perform at least one of following:

determine a number of candidate operating states based on the device information;
setting, based on the number, at least one first offset for target predefined operating states corresponding to target reference signal; and
configuring operating time lengths, periods, and order of occurrence corresponding to the N operating states for the second device; wherein
the target reference signal is at least one reference signal selected from the P reference signals based on the channel measurement results; and
the N operating states comprise the target predefined operating states and the target predefined operating states with first offset setting.

26. The wireless communication apparatus according to claim 20, wherein the configuration module is specifically configured to:

> determine M beam directions of forwarding signals from the second device based on the channel measurement results, one beam direction corresponding to at least one operating state;
> determine the N operating states according to the beam directions; and
> configure the N operating states for the second device; wherein
> M is greater than or equal to 1.

27. The wireless communication apparatus according to claim 26, wherein the configuration module is specifically configured to:

> set, in a case that the beam directions are one beam direction, at least one second offset for a first operating state corresponding to the one beam direction, wherein
> the N operating states comprise the first operating state and the first operating state with second offset setting.

28. The wireless communication apparatus according to claim 26, wherein in a case that the beam directions are at least two beam directions, the N operating states comprise operating states corresponding to each of the at least two beam directions.

29. The wireless communication apparatus according to any one of claims 20 to 28, wherein the target channels comprise S first channels between the second device and S third devices, one third device corresponding to one first channel; wherein

> the channel measurement results are obtained based on channel measurement results of the S first channels, and
> S is an integer greater than 1.

30. The wireless communication apparatus according to any one of claims 19 to 28, wherein the configuration module is further configured to:

> configure time resources for a single data transmission for the third device before the first device communicates wirelessly with the third device via the second device; wherein
> the time resources comprise a plurality of time periods, the plurality of time periods corresponding to time periods of the N operating states, respectively.

31. The wireless communication apparatus according to any one of claims 19 to 28, wherein the apparatus further comprises:
a notification module configured to: in a case that the first device performs downlink data transmission with third device, notify the third device of at least one of following: diversity mode on, time period configuration for the diversity mode, configuration predefined in a protocol, and dynamic or semi-persistent configuration.

32. The wireless communication apparatus according to any one of claims 19 to 28, wherein different states in the N operating states correspond to different forwarding beams forwarded by the second device, and the different forwarding beams comprise at least one of following:
forwarding beams with different phases, forwarding beams with different intensities, forwarding beams with different directions, forwarding beams with different widths, forwarding beams with different gains, and forwarding beams with different sidelobe energies.

33. The wireless communication apparatus according to any one of claims 19 to 28, wherein the first device is a network device or a terminal, the third device is a terminal device, and the second device is an intelligent surface device or a relay device or a backscatter device.

34. The wireless communication apparatus according to any one of claims 19 to 28, wherein the transmission module is further configured to:
transmit scheduling data information to the third device before transmitting data to the third device, the scheduling data information being used to indicate that diversity for operating states of the second device is on.

35. The wireless communication apparatus according to any one of claims 19 to 28, wherein the transmission module is specifically configured to:

> in a case that the first device performs downlink data transmission with the third device, perform data transmission with the third device by mapping a redundant version of data onto time-frequency resources in a plurality of time periods; or
> in a case that the first device performs downlink data transmission with the third device, perform data transmission with the third device by mapping at least two redundant versions onto time-frequency resources in a plurality of time periods, respectively.

36. The wireless communication apparatus according to any one of claims 19 to 28, wherein the apparatus further comprises:

a determining module configured to obtain an operating state switching time period of the second device determined by the third device, wherein

the switching time period is determined based on at least one of following: configuration information of dynamic scheduling information, semi-persistent configuration information of radio resource control RRC or media access control control element MAC CE signaling, and information predefined in a protocol.

37. A wireless communication device, comprising a processor, a memory, and a program or instructions stored in the memory and executable on the processor, wherein when the program or instructions are executed by the processor, steps of the wireless communication method according to any one of claims 1 to 18 are implemented.

38. A readable storage medium, wherein the readable storage medium stores a program or instructions, and when the program or instructions are executed by a processor, steps of the wireless communication method according to any one of claims 1 to 18 are implemented.

39. A computer program product, wherein the computer program product is executed by at least one processor to implement steps of the wireless communication method according to any one of claims 1 to 18.

40. A wireless communication device, wherein the electronic device is configured to perform steps of the wireless communication method according to any one of claims 1 to 18.

1000
0100
0001
1010

Control module

Base station

Terminal

FIG. 1

FIG. 2

FIG. 3

Intelligent surface

Base station

Ordinary
environmental object

Ordinary
environmental object

Terminal

Multipath channel
time domain response

Signal response controlled
by intelligent surface

FIG. 4

Intelligent surface

Base station

Terminal 1
Terminal 3
Terminal 2

Ordinary environmental
object

Ordinary environmental
object

Coverage area of
intelligence surface

FIG. 5

A first device configures N operating states for a second device    ∿ S101

The first device performs data transmission/reception with a third device    ∿ S102

FIG. 6

Beam training    Resource    Downlink data                    Downlink data
                 scheduling

Base station                                          #1    #2        #1    #2    Time

State switching of intelligent    State 1    State 2        State 1    State 2
surface

Operating state of
intelligent surface                                                              Time

Channel    Measurement    Downlink    Downlink    Downlink    Downlink
measurement    report    data in state 1    data in state 2    data in state 1    data in state 2

Terminal                                                                         Time

FIG. 7

800

Wireless communication apparatus

810

Configuration module

820

Transmission module

FIG. 8

800

Wireless communication apparatus

810

Configuration module

820

Transmission module

830

Transceiver module

840

Notification module

850

Determining module

FIG. 9

FIG. 10

FIG. 11

FIG. 12

## INTERNATIONAL SEARCH REPORT

| | |
|---|---|
| International application No. | |
| | **PCT/CN2022/094747** |

### A. CLASSIFICATION OF SUBJECT MATTER

H04L 5/00(2006.01)i; H04B 7/14(2006.01)i; H04W 72/00(2009.01)i

According to International Patent Classification (IPC) or to both national classification and IPC

### B. FIELDS SEARCHED

Minimum documentation searched (classification system followed by classification symbols)

H04L5/-, H04B7/-, H04W72/-

Documentation searched other than minimum documentation to the extent that such documents are included in the fields searched

Electronic data base consulted during the international search (name of data base and, where practicable, search terms used)

CNABS; CNTXT; CNKI; BAIDU: 中继, 转发设备, 电磁单元, 电磁表面, 智能表面, 反射智能表面, 智能反射表面, 智能超表面, 智能面板, 智能反射, 电磁反射面, 超表面, 转发设备, 反向散射, 状态, 波束, 切换, 转换, 基站, 终端 VEN; USTXT; EPTXT; WOTXT; IEEE; 3GPP: relay, Intelligent Surface+, Reflecting Intelligent Surface, RIS, Intelligent Reflecting Surface, IRS, meta 3w surface, backscattering, state, beam, handover, switch, Base Transceiver Station, BTS, eNB, BS, NB, UE

### C. DOCUMENTS CONSIDERED TO BE RELEVANT

| Category* | Citation of document, with indication, where appropriate, of the relevant passages | Relevant to claim No. |
|---|---|---|
| X | CN 105765880 A (NOKIA SOLUTIONS AND NETWORKS OY) 13 July 2016 (2016-07-13) description, paragraphs [0026]-[0057] | 1, 12, 13, 15-17, 19, 30, 31, 33-35, 37-40 |
| A | CN 111201721 A (QUALCOMM INC.) 26 May 2020 (2020-05-26) entire document | 1-40 |
| A | CN 102763346 A (HUAWEI TECHNOLOGIES CO., LTD.) 31 October 2012 (2012-10-31) entire document | 1-40 |
| A | CN 110999443 A (ZTE CORP.) 10 April 2020 (2020-04-10) entire document | 1-40 |
| A | CN 111713040 A (QUALCOMM INC.) 25 September 2020 (2020-09-25) entire document | 1-40 |
| A | WO 2020227859 A1 (TELEFONAKTIEBOLAGET LM ERICSSON (PUBL) et al.) 19 November 2020 (2020-11-19) entire document | 1-40 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **27 July 2022** | **15 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/094747** |

**C.    DOCUMENTS CONSIDERED TO BE RELEVANT**

| Category* | Citation of document, with indication, where appropriate, of the relevant passages | Relevant to claim No. |
| --- | --- | --- |
| A | EP 2802089 A1 (ANDREW WIRELESS SYSTEMS GMBH) 12 November 2014 (2014-11-12)<br>        entire document | 1-40 |
| A | US 2020403689 A1 (MOVANDI CORPORATION) 24 December 2020 (2020-12-24)<br>        entire document | 1-40 |

Form PCT/ISA/210 (second sheet) (January 2015)

INTERNATIONAL SEARCH REPORT
Information on patent family members

International application No.

**PCT/CN2022/094747**

| Patent document cited in search report | | | Publication date (day/month/year) | Patent family member(s) | | | Publication date (day/month/year) |
|---|---|---|---|---|---|---|---|
| CN | 105765880 | A | 13 July 2016 | EP | 3075080 | A1 | 05 October 2016 |
| | | | | WO | 2015078483 | A1 | 04 June 2015 |
| CN | 111201721 | A | 26 May 2020 | WO | 2019074761 | A1 | 18 April 2019 |
| | | | | US | 2019116605 | A1 | 18 April 2019 |
| | | | | EP | 3695521 | A1 | 19 August 2020 |
| | | | | IN | 202027009259 | A | 02 October 2020 |
| | | | | US | 10986644 | B2 | 20 April 2021 |
| CN | 102763346 | A | 31 October 2012 | EP | 2713526 | A1 | 02 April 2014 |
| | | | | WO | 2012103698 | A1 | 09 August 2012 |
| | | | | US | 2014105078 | A1 | 17 April 2014 |
| | | | | EP | 2713526 | A4 | 11 June 2014 |
| | | | | CN | 102763346 | B | 09 September 2015 |
| | | | | US | 9198058 | B2 | 24 November 2015 |
| | | | | EP | 2713526 | B1 | 08 November 2017 |
| CN | 110999443 | A | 10 April 2020 | WO | 2019028765 | A1 | 14 February 2019 |
| CN | 111713040 | A | 25 September 2020 | BR | 112020016398 | A2 | 15 December 2020 |
| | | | | JP | 2021514154 | A | 03 June 2021 |
| | | | | US | 2019260456 | A1 | 22 August 2019 |
| | | | | WO | 2019161008 | A1 | 22 August 2019 |
| | | | | EP | 3753133 | A1 | 23 December 2020 |
| | | | | TW | 201937950 | A | 16 September 2019 |
| | | | | SG | 11202006793 U | A | 28 August 2020 |
| | | | | AU | 2019221559 | A1 | 13 August 2020 |
| | | | | KR | 20200118809 | A | 16 October 2020 |
| | | | | IN | 202047031389 | A | 25 September 2020 |
| | | | | US | 11088750 | B2 | 10 August 2021 |
| WO | 2020227859 | A1 | 19 November 2020 | US | 2022216905 | A1 | 07 July 2022 |
| | | | | EP | 3967090 | A1 | 16 March 2022 |
| EP | 2802089 | A1 | 12 November 2014 | EP | 3512120 | A1 | 17 July 2019 |
| US | 2020403689 | A1 | 24 December 2020 | | None | | |

Form PCT/ISA/210 (patent family annex) (January 2015)

**REFERENCES CITED IN THE DESCRIPTION**

**Patent documents cited in the description**

- CN 202110574225